# EUROPÄISCHE PATENTSCHRIFT

(11) **EP 1 738 370 B1**
(45) Veröffentlichungstag und Bekanntmachung des Hinweises auf die Patenterteilung: **21.01.2009**
(21) Anmeldenummer: 05716095.4
(22) Anmeldetag: 16.03.2005
(51) Int. Cl.: G11B 33/04

(54) **AUFBEWAHRUNGSKASSETTE ZUR AUFNAHME VON INFORMATIONSPLATTEN**
STORAGE CASE FOR RECEIVING DATA DISKS
BOITIER DE RANGEMENT CONCU POUR RECEVOIR DES DISQUES D'INFORMATIONS

(30) Priorität: 14.04.2004 DE 102004018551
(43) Veröffentlichungstag der Anmeldung: 03.01.2007
(73) Patentinhaber: CARTONNERIES DE THULIN S.A., B-7350 Thulin (BE)
(72) Erfinder: LAMMERANT, Filip, B-7350 Thulin (BE)
(74) Vertreter: Christophersen, Ulrich Rudolf
(86) Internationale Anmeldenummer: PCT/EP2005/002768
(87) Internationale Veröffentlichungsnummer: WO 2005/106883

(56) Entgegenhaltungen:
- DE-U1- 20 014 645
- US-A1- 2003 102 232
- US-B1- 6 276 524

## Beschreibung

Die Erfindung betrifft eine Aufbewahrungskassette für mindestens eine, digitale Informationen speichernde und mit einer zentralen Öffnung versehene Informationsplatte, insbesondere Compact Disc (CD) oder Digital Versatile Disc (DVD), bestehend aus einem die Informationsplatte aufnehmenden Basisteil und einem zu dem Basisteil parallelen Deckel, wobei das Basisteil versehen ist mit
- einer im wesentlichen starren Grundplatte mit einer daran ebenfalls starr ausgebildeten Auflage für die Informationsplatte,
- einer im Zentrum der Grundplatte angeordneten Befestigungszone mit einem zentral angeordneten, starren Druckelement sowie um das Druckelement herum verteilten, die Informationsplatte formschlüssig sichernden Zungen mit daran angeformten Schnappnocken, welche geringfügig über den Öffnungsrand der Informationsplatte ragen, wenn diese auf der Auflage aufliegt,
- federnd gestalteten Radialabschnitten, welche die Befestigungszone mit der Grundplatte verbinden, wobei die inneren Enden der federnden Radialabschnitte unmittelbar mit dem zentralen Druckelement verbunden sind, und die Auflage für die Informationsplatte unmittelbar um die Radialabschnitte herum nahe zum Öffnungsrand der Informationsplatte angeordnet ist.

Zur Aufnahme derartiger Informationsplatten sind auf dem Markt eine Vielzahl verschiedener Aufbewahrungskassetten erhältlich. Gemeinsam ist den Kassetten, dass die Informationsplatten auf einem Basisteil mit Hilfe kreisförmig angeordneter Klemmelemente fixiert werden, die in die zentrale Öffnung der Informationsplatte eingreifen und diese so in horizontaler Richtung am Basisteil fixieren. Zur Fixierung der Informationsplatten in vertikaler Richtung übergreifen Schnappnocken der Klemmelemente die zentrale Öffnung der Informationsplatte. Durch Aufbringen einer vertikalen Zugkraft auf die Informationsplatte werden die Klemmelemente so belastet, dass sie bei Erreichen einer hinreichend großen Kraft nach innen einfedern und die CD freigeben. Insbesondere bei zweilagig aufgebauten Informationsplatten nach Art von Digital Versatile Discs (DVD) hat sich diese Klemmtechnik als nachteilig erwiesen, da die hohen Entnahmekräfte insbesondere bei nicht sachgemäßer Entnahme, z. B. nur einseitigem Greifen der DVD, zur Zerstörung der DVD führen können.

Zur Vermeidung dieses Problems sind aus der EP 0 789 914 B1 Aufbewahrungskassetten bekannt, die eine einhändige Entriegelung der Informationsplatte durch Fingerbetätigung eines zentral angeordneten Mechanismus erlauben, der einfach im Aufbau und durch geringe auf die Informationsplatte einwirkende Entnahmekräfte gekennzeichnet ist. Dieser Mechanismus besteht im Wesentlichen aus auf federnden Armen befestigten und mit einem Hintergriff für die Informationsplatte versehenen Klemmelementen, die durch gemeinsames Niederdrücken durch die zentrale Öffnung der Informationsplatte hindurch absenkbar sind. Diese Absenkung der beiden Klemmelemente einschließlich der Schnappnocken erfolgt entlang einer Kreisbahn. Ist der durch die Klemmelemente bewirkte Hintergriff bei Erreichen der dazu erforderlichen Absenktiefe gelöst, wird die Informationsplatte durch einen aus vier federnden Auflagen bestehenden Mechanismus bis über die obere Endstellung des Hintergriffs der Klemmelemente hinweg angehoben. Die zuverlässige Entnahme der CD hängt insoweit vom Geschick des Bedieners ab, als z.B. eine nicht exakt zentrische Druckkraft zu einem ungleichmäßigen Einfedern der Klemmelemente führen kann, wodurch die Informationsplatte in Schieflage gerät, verkantet und unter Umstände nicht ohne weiteres entnommen werden kann.

Aus der EP 0 896 719 B1 ist eine Aufbewahrungskassette bekannt, bei welcher die Entriegelung der Informationsplatte durch Fingerdruck auf ein zentral angeordnetes Druckelement erfolgt. Dieses besteht im Wesentlichen aus drei von einem Basisteil nach innen auskragenden Federarmen, an deren Ende jeweils ein Kreissegment starr befestigt ist. Die Arme mit den daran starr befestigten Kreissegmenten sind innen gelenkig mit einem im Wesentlichen dreieckigen Zentralteil verbunden. Zum Hintergreifen der Informationsplatte sind an den Kreissegmenten Schnappnocken angeformt. Zur Entnahme der Informationsplatte wird das Zentralteil niedergedrückt, so dass die Arme einfedern und die an ihren Enden befestigten Kreissegmente ähnlich wie bei der EP 0 798 914 B1 auf einer Kreisbahn nach unten schwenken. Die Zuverlässigkeit der Entnahme hat sich jedoch als problematisch erwiesen. Denn es ist nicht auszuschließen, dass beim Rückfedern der radialen Arme die Informationsplatte wieder verriegelt wird, da die Arme beim Rückfedern die gleiche Kreisbahn beschreiben. Darüber hinaus hat es sich ebenfalls als nachteilig erwiesen, dass der genaue Zeitpunkt der Entriegelung der Informationsplatten, d. h. das Lösen des Hintergriffs, für den Bediener nur schwer feststellbar ist, so dass es von dessen Geschick abhängt, diesen Zeitpunkt richtig zu treffen. Entlastet er das zentrale Element zu früh, so federt dieses mit der weiterhin gesicherten und nicht entnahmebereiten Informationsplatte nach oben zurück.

Eine Aufbewahrungskassette für eine Compact Disc mit den Merkmalen des Oberbegriffs ist aus der DE 200 14 645 U1 und, in sehr ähnlicher Funktionsweise, aus der US 6,276,524 B1 bekannt. Bei diesen Aufbewahrungskassetten befindet sich zwischen dem Basisteil und dem zentral darin angeordneten Druckelement eine federnde, ringförmige Zone. Innen daran sind nach oben ragende Zungen angeformt, welche mit daran angeordneten Nocken die Compact Disc festhalten. Jeder Druck auf das zentral angeordnete Druckelement führt zu einer Verbiegung der ringförmigen Zone, wodurch die Zungen zwangsweise nach innen verschwenken, und so die Compact Disc freigeben.

Auch bei den Aufbewahrungskassetten nach der DE 200 14 645 U1 und der US 6,276,524 . B1 ist allerdings nicht ausgeschlossen, dass die Nocken der Zungen erneut hinter dem Rand der Compact Disc verriegeln, sobald der Druck auf das zentrale Druckelement wieder nachlässt. Abhängig vom Geschick des Bedieners kann es daher nach Entriegelung der Compact Disc zu deren erneuter Verriegelung kommen, was selbstverständlich unerwünscht ist.

Daher ist es die **Aufgabe** der Erfindung, eine Aufbewahrungskassette zur Aufnahme einer oder mehrerer Informationsplatten bereitzustellen, bei welcher die Informationsplatte unabhängig vom Geschick des Bedieners zuverlässig und unter reproduzierbarer Krafteinwirkung entriegelbar und entnehmbar ist.

Zur **Lösung** dieser Aufgabe wird bei einer Aufbewahrungskassette mit den eingangs angegebenen Merkmalen vorgeschlagen,
dass zur Einfederung der Zungen diese über mindestens eine Biegestelle mit den inneren Enden der federnden Radialabschnitte verbunden sind,
dass die Schnappnocken an ihrer Unterseite mit einer Anschrägung versehen sind,
und dass sich die Zungen bei Druck auf das zentrale Druckelement ohne eingelegte Informationsplatte ausschließlich in vertikaler Richtung mitbewegen und sich unbeweglich gegenüber dem zentralen Druckelement verhalten,
während die Zungen bei Druck auf das zentrale Druckelement mit eingelegter Informationsplatte infolge des Kontakts der Schnappnocken mit der Informationsplatte durch Einfederung nach innen ausweichen, bis die Informationsplatte entriegelt ist.

Mit dieser Konstruktion wird eine zuverlässige Entriegelung und Entnahme der Informationsplatte sichergestellt. Die unmittelbare Verbindung der inneren Enden der federnden Radialabschnitte mit dem zentralen Druckelement und die Verbindung der Zungen über mindestens eine Biegestelle mit den inneren Enden der federnden Radialabschnitte führt dazu, dass sich die die Informationsplatte formschlüssig sichernden Schnappnocken nicht entlang einer Kreisbahn, sondern vertikal absenken. Bei der Abwärtsbewegung des zentralen Druckelements weichen die Zungen nach Innen aus, bis sie unterhalb der Informationsplatte wieder nach außen zurück federn. Die Schnappnocken sind an ihrer Unterseite mit einer Anschrägung versehen. Durch diese Anschrägungen wird das Ausweichen der Zungen zu Beginn des Absenkens erleichtert und so die Reibkräfte reduziert. Dem Rückfedern des zentralen Druckelements in dessen Ausgangsstellung wirkt dann lediglich die Gewichtskraft der Informationsplatte entgegen, die aber nicht ausreicht, um die Zungen nach Innen einfedern zu lassen, so dass die Informationsplatte an der Oberseite der Schnappnocken aufliegt. In dieser Position kann sie an ihrem Rand gut ergriffen werden.

Ein nachgebendes Einfedern der Informationsplatte selbst wird dadurch begrenzt, dass die Auflage für die Informationsplatte unmittelbar um die Radialabschnitte herum nahe zum Öffnungsrand der lnformationsplatte angeordnet ist. Die beim Absenken der Schnappnocken durch die zentrale Öffnung auftretenden Reibkräfte rufen nur ein geringes Moment um die Auflage hervor, wodurch die Biegebelastung der Informationsplatte zum einen gering und zum andern auch reproduzierbar ist. Auf diese Weise bleibt eine nicht exakt zentrische Fingerbetätigung wegen des geringen radialen Abstandes zwischen der Auflage und dem zentralen Druckelement ohne Folgen für die zuverlässige Entnahme der CD/DVD.

Mit einer vorteilhaften Ausgestaltung der Erfindung wird vorgeschlagen, dass sich die Radialabschnitte in dem Bereich zwischen der Auflage für die Informationsplatte und der Befestigungszone erstrecken. Hierdurch werden die federnden Radialabschnitte begrenzt und die Auflage kann umlaufend starr ausgebildet werden.

Darüber hinaus wird vorgeschlagen, dass die Befestigungszone durch Aufbringen einer im wesentlichen senkrecht zur Grundplatte wirkenden Kraft entlang einer Zentralachse des zentralen Druckelements und entgegen der Rückstellkraft der einfedernden Radialabschnitte absenkbar ist, wodurch sichergestellt wird, dass sich das zentrale Druckelement nicht entlang einer Kreisbahn, sondern entlang der Vertikalen absenkt, so dass die Informationsplatte beim Rückfedern der Radialabschnitte zuverlässig mitgenommen, d. h. angehoben wird. Vorteilhaft ist die maximale Absenkung der Befestigungszone dabei mindestens gleich der Gesamthöhe der dort aufgenommenen Informationsplatten, um auch mehrere Informationsplatten mit einer einzigen Betätigung des Druckelements in die Entnahmeposition anheben zu können.

Mit der vorliegenden Erfindung wird des weiteren vorgeschlagen, dass das zentrale Druckelement durch einen mit über seinen Umfang verteilten Ausnehmungen versehenen starren Zapfen gebildet wird, der in den mit Ausnehmungen versehenen Bereichen unterseitig mit einer Basisplatte abschließt. In jeder Ausnehmung des Druckelements kann vorteilhaft mindestens eine Zunge angeordnet sein, die im Wesentlichen parallel zur Zentralachse der Befestigungszone ausgerichtet ist. Durch diese Ausgestaltung lassen sich die Zungen und das Druckelement platzsparend in dem Bereich der Befestigungszone integrieren.

Auch ist es vorteilhaft, dass die zwischen den Ausnehmungen verbleibenden starren Umfangsbereiche des Druckelements zur Zentrierung der Informationsplatte beitragen, vorzugsweise gemeinsam mit den federnden Zungen. Darüber hinaus können die in den Ausnehmungen angeordneten Zungen mit ihren Außenseiten ebenfalls zur Zentrierung beitragen, wodurch die Anlagefläche der zentralen Öffnung der lnformationsplatte gesteigert wird.

Mit einer besonders vorteilhaften Ausgestaltung der Erfindung wird vorgeschlagen, dass die Zungen in radialer Richtung elastisch sind. Durch diese Etastizität der Zungen in radialer Richtung wird die auf die Informationsplatte einwirkende Reib- bzw. Entnahmekraft reduziert, da die Zungen beim Absenken schon bei geringen Querkräften nach innen einfedern und so die Reibung an der Innenseite der zentralen Öffnung reduziert wird.

Darüber hinaus ist es von Vorteil, wenn die durch die Radialabschnitte gebildete federnde Zone mit Aussparungen versehen ist. Durch diese Aussparungen werden den verschiedenen Umfangsbereichen der Befestigungszone unterschiedliche Spannungszustände aufgeprägt. So können z.B. bestimmte Bereiche aus dem Kraftfluß der Einfederungskräfte genommen und somit nahezu spannungsfrei gehalten werden.

Vorteilhaft befinden sich die Zungen und die Aussparungen auf denselben Umfangsabschnitten, die aufgrund der Aussparungen im wesentlichen spannungsfrei sind, so daß die Zungen ebenfalls im spannungsfreien Bereich der Befestigungszone angeordnet sind. Mit Hilfe dieser Anordnung federn die Zungen beim Absenken nur dann nach Innen ein, falls auch eine Informationsplatte eingelegt ist. Andernfalls werden die Zungen ausschließlich in vertikaler Richtung mitbewegt, sie verhalten sich unbeweglich gegenüber dem zentralen Druckelement.

Die Breite der Aussparungen ist dabei gemäß einer weiteren Ausgestaltung mindestens gleich der Breite der Zungen, was der gewünschten Spannungsverteilung über die Umfangsbereiche der Befestigungszone weiter zuträglich ist.

Mit einer weiteren Ausgestaltung wird vorgeschlagen, daß sich die Biegestellen für das Zurückfedern der Zungen nur in den mit Ausnehmungen versehenen Umfangsbereichen der Befestigungszone befinden, wobei die übrigen Umfangsbereiche der Befestigungszone im wesentlichen starr ausgebildet sind. Auch diese Ausgestaltung bedingt eine Reduzierung der auf die Informationsplatte einwirkenden Entnahmekräfte, da die zum Einfedern der Zungen erforderliche Querkraft reduziert wird, diese also leichter einfedern und die Reibkräfte zwischen der Innenseite der zentralen Öffnung der Informationsplatte und den Schnappnocken reduziert werden.

Ferner ist es von Vorteil, daß eine Stauchzone Bestandteil jedes Radialbereichs ist, die beim Absenken der Befestigungszone einen radialen Längenausgleich herbeiführt. Denn beim Absenken der Befestigungszone in vertikaler Richtung ändert sich die Länge der Radialabschnitte. Diese Längendifferenz wird durch die Stauchzone ausgeglichen. Der Längenausgleich reduziert die Materialbelastung der Radialabschnitte und ist somit der Lebensdauer der Aufbewahrungskassette zuträglich.

Abschließend wird vorgeschlagen, daß unterhalb der Auflage und in geringem Abstand unterhalb der Befestigungszone zwei sich gegenüberliegende Durchschuböffnungen für ein vorzugsweise stabförmiges Sicherungselement vorgesehen sind, welches das Absenken der Befestigungszone blockiert und somit die Entnahme der Informationsplatte verhindert. Ein derartiges Sicherungelement dient dem Diebstahlschutz, da es den Zugriff auf die bevorratete Informationsplatte dadurch verhindert, daß die Befestigungszone im Falle des eingeschobenen stabförmigen Sicherungselements nicht absenkbar ist. Die Informationsplatte kann dann nicht mehr durch Fingerdruck entriegelt werden, ohne zuvor das stabförmige Sicherungselement zu entnehmen.

Weitere Einzelheiten und Vorteile der Erfindung ergeben sich aus der nachfolgenden Beschreibung der zugehörigen Zeichnungen, in denen eine bevorzugte Ausgestaltung der erfindungsgemäßen Aufbewahrungskassette beispielhaft dargestellt ist. In den Zeichnungen zeigen:
- Fig.1: eine nur teilweise dargestellte Seitenansicht einer geöffneten Aufbewahrungskassette für eine oder auch für mehrere CDs oder DVDs,
- Fig. 2: eine Aufsicht auf die geöffnete Aufbewahrungskassette gemäß Fig. 1,
- Fig. 3: einen bereichsweise vergrößerten Ausschnitt der zentralen Befestigungszone einer Aufbewahrungskassette in einer Aufsicht gemäß Fig. 2,
- Fig. 3a: eine der Fig. 3 entsprechende, weitere Darstellung;
- Fig. 4: eine Schnittdarstellung der Befestigungszone entlang der abgeknickten Schnittlinie C-C in Fig. 3,
- Fig. 5: eine teilweise Darstellung eines Schnitts durch die Befestigungszone entlang der Schnittlinie D in Fig. 3 und
- Fig. 6: eine vergrößerte Detailansicht IV gemäß Fig. 3.

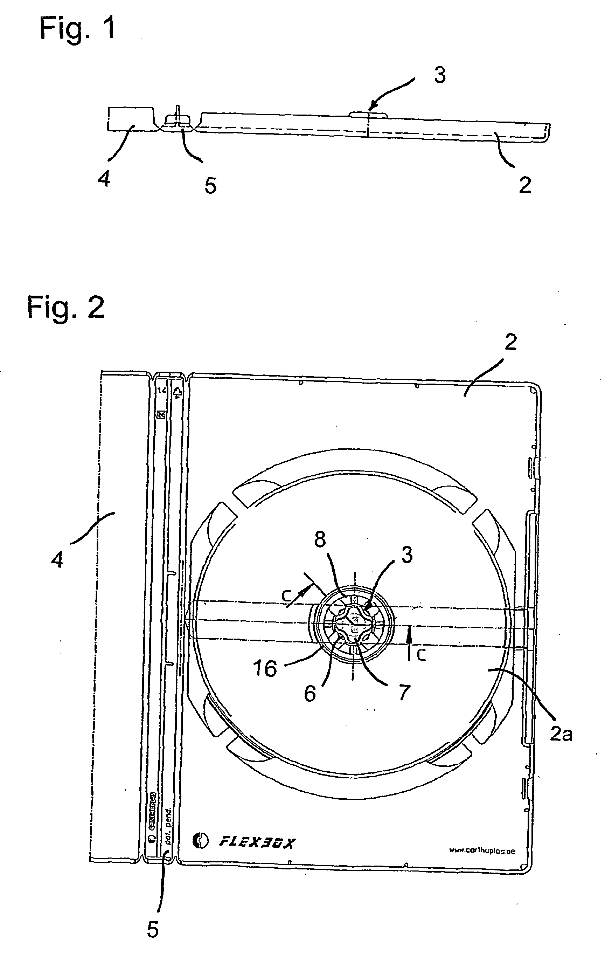

In Fig. 1 ist eine im wesentlichen aus einem Deckel 4, einem doppelten Gelenk 5, einem Basisteil 2 und einer Befestigungszone 3 aufgebaute Aufbewahrungskassette in einer Seitenansicht dargestellt. Die Kassette ist einstückig aus z.B. Polypropylen.

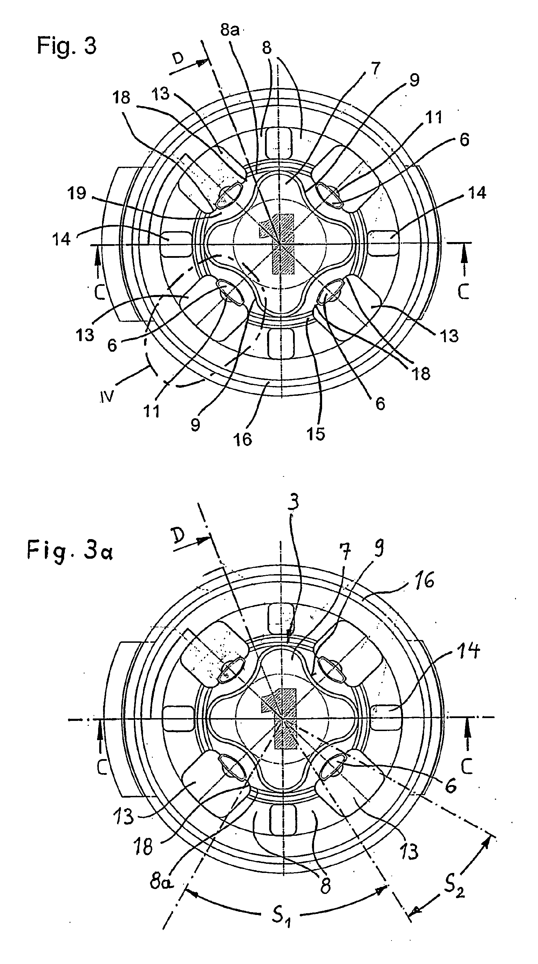

Wie Fig. 2 am besten erkennen läßt, befindet sich die ein Betätigungselement bildende Befestigungszone 3 im Zentrum des Basisteils 2. Die Befestigungszone 3 besteht im wesentlichen aus vier über deren Umfang verteilten Zungen 6 sowie einem zentralen Druckelement 7. Über vier federnde Radialabschnitte 8, die sich ausschließlich in Segmenten S₁ (Fig. 3a) der Befestigungszone 3 befinden, ist die Befestigungszone mit einer starren Auflage 16 verbunden, die wiederum starr zur Grundplatte 2a des Basisteils 2 ist.

Wie die Fign. 3 und 3a am besten erkennen lassen, ist das weitgehend starr gestaltete Druckelement 7 an seinem Umfang mit Ausnehmungen 9 versehen, die unten durch Basisplatten 19 verschlossen sind. In jeder Ausnehmung 9 befindet sich jeweils eine nach oben ragende Zunge 6 mit einem außen daran angeformten Schnappnocken 11.

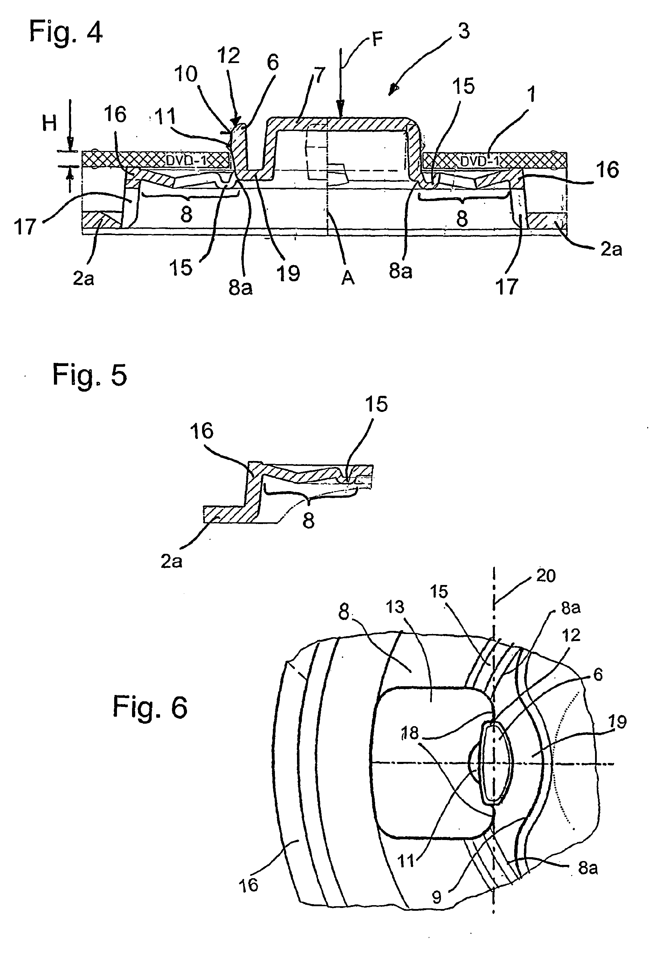

Um das zentrale Druckelement 7 herum ist eine Stauchzone 15 der Radialabschnitte 8 zu erkennen, auf deren Funktion später anhand der Fig. 4 im Detail eingegangen wird. Die Stauchzone 15 ist nicht über den gesamten Umfang der Befestigungszone 3 ausgebildet, sondern wird von den den Radialabschnitt 8 durchdringenden Aussparungen 13 unterbrochen.

Die Aussparungen 13 sind auf denselben Umfangsabschnitten bzw. Segmenten S₂ wie die Zungen 6 angeordnet und reichen bis an die jeweilige Basisplatte 19 des zentralen Druckelements 7 heran. Wegen der Aussparung 13 wird jede Basisplatte 19 nach außen hin durch einen freien Rand begrenzt. Dieser freie Rand dient als Biegestelle 18 der besseren Einfederung der Zungen 6. Jede Zunge 6 befindet sich also mittig zwischen ihren beiden Biegestellen 18 im Randbereich der Basisplatte 19.

Durch die Aussparung 13 wird die Basisplatte 19 und damit auch die von der Basisplatte 19 nach oben stehende Zunge 6 beim Absenken des zentralen Druckelements 7 trotz der Biegung in den federnden Radialabschnitten 8 im wesentlichen spannungsfrei gehalten. Denn der sich bei Druck auf das Druckelement 7 einstellende Kraftfluß wird nur über die keine Ausnehmungen 13 aufweisenden Umfangsbereiche bzw. Segmente S₁ geschlossen. Die anderen Segmente S₂ (Fig. 3a) liegen außerhalb des Kraftflußes, und bleiben somit nahezu spannungsfrei, weshalb auch die Zungen 6 spannungsfrei bleiben. Dieser Effekt wird durch zusätzliche Aussparungen 14 mittig im Radialabschnitt 8 und damit mittig im Segment S₁ noch unterstützt. Die Aussparungen 14 verbessern auch die Elastizität der Radialabschnitte 8.

Aus Fig. 4 läßt sich die Funktion der Stauchzone 15 am besten erkennen. Wird die Befestigungszone 3 durch Aufbringen der Kraft F um mindestens die Höhe H der bevorrateten Informationsplatte 1 entlang der Zentralachse A in vertikaler Richtung abgesenkt, ändert sich der radiale Abstand zwischen dem inneren Ende 8a der leicht V-förmigen Radialabschnitte 8 und der starren Auflage 16. Der Ausgleich der resultierenden Längendifferenz wird von der Stauchzone 15 übernommen, welche sich sowohl beim Absenken als auch beim Anheben der Befestigungszone 3 in radialer Richtung wie eine ausgleichende Feder verhält. Durch die Stauchzone 15 werden Überbelastungen des Radialabschnitts 8 und der Auflage 16 auch bei unsachgemäßer Handhabung vermieden, z.B. bei nicht zentrischem Druck auf das zentrale Druckelement 7.

Die Anordnung der Zungen 6 in den Ausnehmungen 9 und auf den Basisplatten 19 ist in Fig. 6 dargestellt. Zu erkennen ist eine Ausnehmung 9 des zentralen Druckelements, die unterseitig mit der Basisplatte 19 abschließt. Die durch die Aussparung 13 und die Basisplatte 19 gebildeten Biegestellen 18 befinden sich auf einer Biegelinie 20 der Zunge 6 unterhalb dieser. Es ist zu erkennen, daß die Aussparung 13 die Stauchzone 15 vollständig durchtrennt, so daß der radial innen zu der Aussparung 13 liegende Teil der Befestigungszone 3, also im wesentlichen die Basisplatte 19 und die Zunge 6, nicht zur Übertragung der Betätigungskraft F vom zentralen Druckelement 7 auf den federnden Radialabschnitt 8 beiträgt. Die Zunge 6 befindet sich also im außerhalb des Kraftflusses liegenden Segment S₂ (Fig. 3a) der Befestigungszone 3, so daß sie bei Druck auf das zentrale Druckelement 7 ohne eine eingelegte Informationsplatte 1 völlig spannungsfrei bleibt.

Die Entriegelung und Entnahme einer durch die Befestigungszone 3 aufgenommenen Informationsplatte 1 wird im folgenden anhand der Fig. 4 erläutert, die die Befestigungszone 3 in einem Schnitt dargestellt. Zunächst befindet sich die Informationsplatte 1 in einem durch das zentrale Druckelement 7, die Zungen 6, die Auflage 16 und den Hintergriff am Schnappnocken 11 gebildeten Formschluß, durch den die Informationsplatte 1 sowohl in horizontaler wie auch in vertikaler Richtung gesichert ist. Durch Aufbringen einer in vertikaler Richtung wirkenden Kraft F auf das zentrale Druckelement 7 wird dieses dann entlang der Zentralachse A und unter Stauchung der Stauchzone 15 abgesenkt. Während des Absenkens treten zunächst die unterseitig mit Anschrägungen versehenen und über den oberen Rand der zentralen Öffnung hervor stehenden Schnappnocken 11 mit der Informationsplatte 1 in Kontakt. Die Informationsplatte übt daher eine nach innen gerichtete Kraft auf die Zungen 6 aus. Diese Kraft bewirkt ein um das untere Ende der Zunge 6 in radialer Richtung nach innen drehendes Moment, infolge dessen die Zunge 6 um die Biegestelle 18 schwenkt und durch Einfederung nach innen ausweicht, bis der Hintergriff gelöst ist.

Erst nachdem der nach innen ausweichende Schnappnocken 11 unter Reibung vollständig durch die zentrale Öffnung der Informationsplatte 1 hindurch geführt ist, federt die Zunge 6 wieder nach außen zurück und die Informationsplatte 1 ist vollständig entriegelt, d.h. der Formschluß in vertikaler Richtung ist aufgehoben. Der Schnappnocken 11 untergreift in dieser Stellung mit seiner Oberseite den unteren Rand der zentralen Öffnung der bevorrateten Informationsplatte 1. Wird die Betätigungskraft F nun weggenommen, federt die Befestigungszone 3 unter Streckung der Stauchzone 15 und entlang der Zentralachse A des Betätigungselements unter Mitnahme der Informationsplatte 1 wieder nach oben. In dieser angehobenen Stellung kann die Informationsplatte 1 an ihrem Außenrand gegriffen und entnommen werden.

Da die zwischen Schnappnocken 11 und Informationsplatte 1 wirkende Reibkraft von den dort angreifenden Normalkräften abhängt und für die auf die Informationsplatte 1 einwirkende Gesamtentnahmekraft maßgeblich ist, ist die diese so gering wie möglich zu halten. Die Schnappnocken 11 sind daher mit einer unterseitigen Anschrägung versehen, welche vorzugsweise einen Winkel von deutlich weniger als 45° mit der Vertikalen einschließt. Die obere Anschrägung der Schnappnocken 11 schließt hingegen einen Winkel mit der Vertikalen ein, der deutlich als 45° ist, so daß die sichere Mitnahme der Informationsplatte 1 beim Rückfedern der Befestigungszone 3 gewährleistet ist. Zur Reduktion der Reibkräfte beim Absenken der Befestigungszone 3 sind ferner die Zungen 6 selbst in radialer Richtung elastisch ausgebildet, so daß sie auch bei geringer Querkraft nach innen einfedern.

Da der Abstand zwischen dem zentralen Druckelement 7 bzw. dem inneren Ende 8a des Radialbereichs 8 und der starren Auflage 16 so gering wie möglich ist, werden die Reibkräfte beim Absenken des zentralen Druckelements 7 gering gehalten. Hierdurch ergibt sich eine geringe Durchbiegung des Zentrums der Informationsplatte 1 und somit eine schonende Behandlung der Informationsplatte. Außerdem ist der Entriegelungspunkt genau definiert und für den Benutzer gut spürbar. Vorzugsweise befindet sich die starre Auflage 16 radial weiter innen, als die mit digitalen Informationen beschriebene Ringzone der CD oder DVD.

Darüber hinaus werden aufgrund der Anordnung des zentralen Druckelements 7 und der starren Auflage 16 Schrägstellungen bzw. Verkantungen der Informationsplatte 1 durch z.B. eine nicht zentrische Betätigung des zentralen Druckelements 7 weitgehend vermieden, so daß die Entnahme unabhängig vom Geschick des Bedieners zuverlässig durchführbar ist.

### Bezugszeichen

- 1: Informationsplatte
- 2: Basisteil
- 2a: Grundplatte
- 3: Befestigungszone
- 4: Deckel
- 5: doppeltes Gelenk
- 6: Zunge
- 7: Druckelement
- 8: Radialabschnitt
- 8a: Inneres Ende der Radialabschnitte
- 9: Ausnehmung
- 10: Außenseite
- 11: Schnappnocken
- 12: Anschrägung
- 13: Aussparung
- 14: Aussparung
- 15: Stauchzone
- 16: Auflage
- 17: Durchschuböffnung
- 18: Biegestelle
- 19: Basisplatte
- 20: Biegelinie der Zunge

- F: Kraft
- A: Zentralachse
- H: Gesamthöhe der aufgenommenen Informationsplatten

- S₁: Segment
- S₂: Segment

## Patentansprüche

1. Aufbewahrungskassette für mindestens eine, digitale Informationen speichernde und mit einer zentralen Öffnung versehene Informationsplatte, insbesondere Compact Disc (CD) oder Digital Versatile Disc (DVD), bestehend aus einem die Informationsplatte (1) aufnehmenden Basisteil (2) und einem zu dem Basisteil (2) parallelen Deckel (4), wobei das Basisteil (2) versehen ist mit
- einer im wesentlichen starren Grundplatte (2a) mit einer daran ebenfalls starr ausgebildeten Auflage (16) für die Informationsplatte (1),
- einer im Zentrum der Grundplatte (2a) angeordneten Befestigungszone (3) mit einem zentral angeordneten, starren Druckelement (7) sowie um das Druckelement (7) herum verteilten, die Informationsplatte (1) formschlüssig sichernden Zungen (6) mit daran angeformten Schnappnocken (11), welche geringfügig über den Öffnungsrand der Informationsplatte (1) ragen, wenn diese auf der Auflage (16) aufliegt,
- federnd gestalteten Radialabschnitten (8), welche die Befestigungszone (3) mit der Grundplatte (2a) verbinden, wobei die inneren Enden (8a) der federnden Radialabschnitte (8) unmittelbar mit dem zentralen Druckelement (7) verbunden sind, und die Auflage (16) für die Informationsplatte (1) unmittelbar um die Radialabschnitte (8) herum nahe zum Öffnungsrand der Informationsplatte (1) angeordnet ist,
**dadurch gekennzeichnet,**
**dass** zur Einfederung der Zungen (6) diese über mindestens eine Biegestelle (18) mit den inneren Enden (8a) der federnden Radialabschnitte (8) verbunden sind,
**dass** die Schnappnocken (11) an ihrer Unterseite mit einer Anschrägung versehen sind,
und **dass** sich die Zungen (6) bei Druck (F) auf das zentrale Druckelement (7) ohne eingelegte Informationsplatte (1) ausschließlich in vertikaler Richtung mitbewegen und sich unbeweglich gegenüber dem zentralen Druckelement (7) verhalten, während die Zungen (6) bei Druck (F) auf das zentrale Druckelement (7) mit eingelegter Informationsplatte (1) infolge des Kontakts der Schnappnocken (11) mit der Informationsplatte (1) durch Einfederung nach innen ausweichen, bis die Informationsplatte (1) entriegelt ist.

2. Aufbewahrungskassette nach Anspruch 1, **dadurch gekennzeichnet, dass** sich die Radialabschnitte (8) in dem Bereich zwischen der Auflage (16) für die Informationsplatte (1) und der Befestigungszone (3) erstrecken.

3. Aufbewahrungskassette nach Anspruch 1 oder Anspruch 2, **dadurch gekennzeichnet, dass** die Befestigungszone (3) durch Aufbringen einer im wesentlichen senkrecht zur Grundplatte (2a) wirkenden Kraft (F) entlang einer Zentralachse (A) des zentralen Druckelements (7) und entgegen der Rückstellkraft der einfedernden Radialabschnitte (8) absenkbar ist.

4. Aufbewahrungskassette nach Anspruch 3, **dadurch gekennzeichnet, dass** die maximale Absenkung der Befestigungszone (3) mindestens gleich der Gesamthöhe (H) der dort aufgenommenen Informationsplatten (1) ist.

5. Aufbewahrungskassette nach einem der vorangehenden Ansprüche, **dadurch gekennzeichnet, dass** das zentrale Druckelement (7) durch einen mit über seinen Umfang verteilten Ausnehmungen (9) versehenen starren Zapfen gebildet wird, der in den mit den Ausnehmungen (9) versehenen Bereichen unterseitig mit einer Basisplatte (19) abschließt.

6. Aufbewahrungskassette nach Anspruch 5, **dadurch gekennzeichnet, dass** in jeder Ausnehmung (9) des Druckelements (7) mindestens eine der Zungen (6) angeordnet ist, und dass die Zunge im die im wesentlichen parallel zur Zentralachse (A) der Befestigungszone (3) ausgerichtet ist.

7. Aufbewahrungskassette nach Anspruch 6, **dadurch gekennzeichnet, dass** die zwischen den Ausnehmungen (9) verbleibenden Umfangsbereiche des Druckelements (7) die Zentrierung für die Informationsplatte (1) bilden, vorzugsweise gemeinsam mit den Zungen (6).

8. Aufbewahrungskassette nach einem der vorangehenden Ansprüche, **dadurch gekennzeichnet, dass** die Zungen (6) in radialer Richtung elastisch sind.

9. Aufbewahrungskassette nach einem der vorangehenden Ansprüche, **dadurch gekennzeichnet, dass** sich in Umfangsrichtung der Befestigungszone (3) erste Segmente (S₁), auf denen die Radialabschnitte (8) mit dem zentralen Druckelement (7) verbunden sind, mit zweiten Segmenten (S₂) abwechseln, auf denen die Zungen (6) angeordnet sind.

10. Aufbewahrungskassette nach einem der vorangehenden Ansprüche, **dadurch gekennzeichnet, dass** sich zwischen aufeinander folgenden Radialabschnitten (8) Aussparungen (13) befinden.

11. Aufbewahrungskassette nach Anspruch 9 oder Anspruch 10, **dadurch gekennzeichnet, dass** sich die Zungen (6) und die Aussparungen (13) auf demselben Segment (S₂) befinden.

12. Aufbewahrungskassette nach einem der vorhergehenden Ansprüche, **dadurch gekennzeichnet, dass** sich die Zungen (6) am Rand der Aussparungen (13) auf der Basisplatte (19) befinden.

13. Aufbewahrungskassette nach Anspruch 5 oder Anspruch 6 oder Anspruch 7, **dadurch gekennzeichnet, dass** sich die Biegestellen (18) nur in den mit Ausnehmungen (9) versehenen Umfangsbereichen der Befestigungszone (3) erstrecken, wobei die übrigen Umfangsbereiche der Befestigungszone (3) im wesentlichen starr ausgebildet sind.

14. Aufbewahrungskassette nach einem der vorhergehenden Ansprüche, **dadurch gekennzeichnet, dass** eine Stauchzone (15) Bestandteil jedes Radialbereichs (8) ist, die beim Absenken der Befestigungszone (3) einen radialen Längenausgleich herbeiführt.

15. Aufbewahrungskassette nach einem der vorhergehenden Ansprüche, **dadurch gekennzeichnet, dass** unterhalb der Auflage (16) und in geringem Abstand unterhalb der Befestigungszone (3) zwei sich gegenüber liegende Durchschuböffnungen (17) für ein stabförmiges Sicherungselement vorgesehen sind, welches das Absenken der Befestigungszone (3) blockiert und somit die Entnahme der Informationsplatte (1) verhindert.

## Claims

1. Storage case for at least one data disk, in particular Compact Disc (CD) or Digital Versatile Disk (DVD), storing digital information and provided with a central aperture, which storage case comprises a base part (2) accommodating the data disk (1) and a lid (4) parallel to the base part (2), the base part (2) being provided with
- a substantially rigid base plate (2a) having a support (16), likewise rigidly configured thereon, for the data disk (1),
- a fastening zone (3), arranged in the centre of the base plate (2a) and having a centrally disposed, rigid pressure element (7), and tongues (6), which are distributed around the pressure element (7) and positively secure the data disk (1) and have, moulded onto them, snap-on cams (11), which project slightly over the aperture rim of the data disk (1) when this is resting on the support (16),
- resiliently formed radial portions (8), which connect the fastening zone (3) to the base plate (2a), the inner ends (8a) of the resilient radial portions (8) being connected directly to the central pressure element (7), and the support (16) for the data disk (1) being arranged directly around the radial portions (8) close to the aperture rim of the data disk (1),
**characterized**
**in that**, for the inward deflection of the tongues (6), these are connected by at least one bending point (18) to the inner ends (8a) of the resilient radial portions (8),
**in that** the snap-on cams (11) are provided with a bevel on their bottom side,
and **in that** the tongues (6), in the event of pressure (F) upon the central pressure element (7) without inserted data disk (1), move jointly along solely in the vertical direction and behave immovably relative to the central pressure element (7), whilst the tongues (6), in the event of pressure (F) upon the central pressure element (7) with inserted data disk (1), due to the contact of the snap-on cam (11) with the data disk (1), yield inwards by inward deflection until the data disk (1) is released.

2. Storage case according to Claim 1, **characterized in that** the radial portions (8) extend in the region between the support (16) for the data disk (1) and the fastening zone (3).

3. Storage case according to Claim 1 or Claim 2, **characterized in that** the fastening zone (3) can be lowered by application of a force (F), acting substantially perpendicularly to the base plate (2a), along a centre axis (A) of the central pressure element (7) and counter to the restoring force of the inward-deflecting radial portions (8).

4. Storage case according to Claim 3, **characterized in that** the maximum lowering of the fastening zone (3) is at least equal to the total height (H) of the data disks (1) accommodated there.

5. Storage case according to one of the preceding claims, **characterized in that** the central pressure element (7) is formed by a rigid pin, which is provided with recesses (9) distributed over its periphery and which, in the regions provided with the recesses (9), terminates on the bottom side with a base plate (19).

6. Storage case according to Claim 5, **characterized in that** at least one of the tongues (6) is arranged in each recess (9) of the pressure element (7), and **in that** the tongue is aligned substantially parallel to the centre axis (A) of the fastening zone (3).

7. Storage case according to Claim 6, **characterized in that** those peripheral regions of the pressure element (7) which are left between the recesses (9) form the centring for the data disk (1), preferably in common with the tongues (6).

8. Storage case according to one of the preceding claims, **characterized in that** the tongues (6) are elastic in the radial direction.

9. Storage case according to one of the preceding claims, **characterized in that**, in the peripheral direction of the fastening zone (3), first segments (S₁), on which the radial portions (8) are connected to the central pressure element (7), alternate with second segments (S₂), on which the tongues (6) are disposed.

10. Storage case according to one of the preceding claims, **characterized in that** between successive radial portions (8) cavities (13) are present.

11. Storage case according to Claim 9 or Claim 10, **characterized in that** the tongues (6) and the cavities (13) are located on the same segment (S₂).

12. Storage case according to one of the preceding claims, **characterized in that** the tongues (6) are located on the rim of the cavities (13) on the base plate (19).

13. Storage case according to Claim 5 or Claim 6 or Claim 7, **characterized in that** the bending points (18) extend only in those peripheral regions of the fastening zone (3) which are provided with recesses (9), the remaining peripheral regions of the fastening zone (3) being of substantially rigid configuration.

14. Storage case according to one of the preceding claims, **characterized in that** a compression zone (15) is a constituent part of each radial region (8) and, when the fastening zone (3) is lowered, brings about a length compensation in the radial direction.

15. Storage case according to one of the preceding claims, **characterized in that**, beneath the support (16) and at a short distance below the fastening zone (3), two mutually opposing push-through openings (17) for a rod-shaped securing element, which blocks the lowering of the fastening zone (3) and thus prevents the removal of the data disk (1).

## Revendications

1. Boîtier de rangement pour au moins un disque d'informations contenant des informations numériques et muni d'une ouverture centrale, en particulier un Compact Disc (CD) ou un Digital Versatile Disc (DVD), constitué d'une partie de base (2) recevant le disque d'informations (1) et d'un couvercle (4) parallèle à la partie de base, dans lequel la partie de base (2) est munie
- d'une plaque de base (2a) pour l'essentiel rigide avec un support (16) réalisé dessus également de manière rigide pour le disque d'informations (1),
- une zone de fixation (3) placée au centre de la plaque de base (2a) avec un élément de pression (7) rigide en position centrale ainsi que des languettes (6) réparties autour de l'élément de pression (7) et immobilisant le disque d'informations (1) par engagement positif, avec des cames de crantage (11) formées dessus, qui dépassent légèrement par rapport au bord d'ouverture du disque d'informations (1) quand celui-ci repose sur le support (16),
- des sections radiales (8) réalisées élastiques, qui relient la zone de fixation (3) à la plaque de base (2a), les extrémités intérieures (8a) des sections radiales élastiques (8) étant reliées directement à l'élément de pression central (7) et le support (16) pour le disque d'informations (1) étant placé directement autour des sections radiales (8) près du bord d'ouverture du disque d'informations (1),
**caractérisé en ce que**, pour la déformation élastique des languettes (6), celles-ci sont reliées aux extrémités intérieures (8a) des sections radiales élastiques (8) par l'intermédiaire d'au moins une zone de flexion (18),
**en ce que** les cames de crantage (11) sont munies d'un biseau sur leur face inférieure,
et **en ce que**, lors d'une pression (F) sur l'élément de pression central (7) en l'absence de disque d'informations (1), les languettes (6) se déplacent exclusivement dans la direction verticale et se comportent de façon immobile par rapport à l'élément de pression central (7), tandis qu'en cas de pression (F) sur l'élément central (7) en présence du disque d'informations (1), les languettes (6) s'écartent vers l'intérieur par élasticité en raison du contact des cames de crantage (11) avec le disque d'informations (1), jusqu'à ce que le disque d'informations (1) soit déverrouillé.

2. Boîtier de rangement selon la revendication 1, **caractérisé en ce que** les sections radiales (8) s'étendent dans la zone située entre le support (16) pour le disque d'informations (1) et la zone de fixation (3).

3. Boîtier de rangement selon la revendication 1 ou 2, **caractérisé en ce que** la zone de fixation (3) peut être abaissée par application d'une force (F) agissant pour l'essentiel perpendiculairement à la plaque de base (2a) le long d'un axe central (A) de l'élément de pression central (7) et contre la force de rappel des sections radiales élastiques (8).

4. Boîtier de rangement selon la revendication 3, **caractérisé en ce que** l'abaissement maximal de la zone de fixation (3) est au moins égal à la hauteur totale (H) des disques d'information (1) qui y sont reçus.

5. Boîtier de rangement selon l'une des revendications précédentes, **caractérisé en ce que** l'élément de pression central (7) est formé par un tenon rigide muni d'évidements (9) répartis sur sa circonférence, tenon qui, dans les zones munies des évidements (9), se termine sur le dessous par une plaque de base (19).

6. Boîtier de rangement selon la revendication 5, **caractérisé en ce que** dans chaque évidement (9) de l'élément de pression (7) est placée au moins l'une des languettes (6), et **en ce que** la languette est orientée pour l'essentiel parallèlement à l'axe central (A) de la zone de fixation (3).

7. Boîtier de rangement selon la revendication 6, **caractérisé en ce que** les zones de circonférence de l'élément de pression (7) restant entre les évidements (9) forment le centrage pour le disque d'informations (1), de préférence en commun avec les languettes (6).

8. Boîtier de rangement selon l'une des revendications précédentes, **caractérisé en ce que** les languettes (6) sont élastiques dans la direction radiale.

9. Boîtier de rangement selon l'une des revendications précédentes, **caractérisé en ce que** des premiers segments (S₁) dans la direction circonférentielle de la zone de fixation (3), sur lesquels les sections radiales (8) sont reliées à l'élément de pression central (7), alternent avec des deuxièmes segments (S₂) sur lesquels sont placées les languettes (6).

10. Boîtier de rangement selon l'une des revendications précédentes, **caractérisé en ce qu'**entre des sections radiales (8) successives se trouvent des évidements (13).

11. Boîtier de rangement selon la revendication 9 ou 10, **caractérisé en ce que** les languettes (6) et les évidements (13) se trouvent sur le même segment (S₂).

12. Boîtier de rangement selon l'une des revendications précédentes, **caractérisé en ce que** les languettes (6) se trouvent sur le bord des évidements (13) sur la plaque de base (19).

13. Boîtier de rangement selon la revendication 5, 6 ou 7, **caractérisé en ce que** les zones de flexion (18) ne s'étendent que dans les parties de circonférence de la zone de fixation munies des évidements (9), les autres parties de circonférence de la zone de fixation (3) étant réalisées pour l'essentiel rigides.

14. Boîtier de rangement selon l'une des revendications précédentes, **caractérisé en ce qu'**une zone refoulée (15) fait partie de chaque zone radiale (8), zone refoulée qui, lors de la descente de la zone de fixation (3), provoque une compensation radiale de longueur.

15. Boîtier de rangement selon l'une des revendications précédentes, **caractérisé en ce qu'**au-dessous du support (16) et à faible distance au-dessous de la zone de fixation (3) sont prévues deux ouvertures d'enfoncements (17) mutuellement opposées pour un élément d'immobilisation en forme de barre, qui bloque la descente de la zone de fixation (3) et empêche ainsi le retrait du disque d'informations (1).
